# EUROPEAN PATENT SPECIFICATION

(11) **EP 4 169 849 B1**
(45) Date of publication and mention of the grant of the patent: **04.06.2025**
(21) Application number: 21825154.4
(22) Date of filing: 17.06.2021
(51) Int. Cl.: B65D 65/40, C08K 5/5435, C08L 101/06, C09D 133/02, C09D 201/08, C08K 3/10, C09D 7/61, C09D 7/63, B32B 7/02

(54) **GAS BARRIER MULTILAYER BODY, COATING LIQUID FOR PRODUCING SAME, PACKAGING MATERIAL, PACKAGE, AND PACKAGED ARTICLE**
GASSPERRENDER MEHRSCHICHTKÖRPER, BESCHICHTUNGSFLÜSSIGKEIT ZU SEINER HERSTELLUNG, VERPACKUNGSMATERIAL, VERPACKUNG UND VERPACKTER ARTIKEL
CORPS MULTICOUCHE DE BARRIÈRE AUX GAZ, LIQUIDE DE REVÊTEMENT POUR SA PRODUCTION, MATÉRIAU D'EMBALLAGE, EMBALLAGE ET ARTICLE EMBALLÉ

(30) Priority: 19.06.2020 JP 2020105783
(43) Date of publication of application: 26.04.2023
(73) Proprietor: TOPPAN INC., Tokyo 110-0016 (JP)
(72) Inventor: OKANO, Tetsuya, Tokyo 110-0016 (JP); MAEDA, Masaki, Tokyo 110-0016 (JP)
(74) Representative: Hoffmann Eitle
(86) International application number: PCT/JP2021/023089
(87) International publication number: WO 2021/256545

(56) References cited:
- WO-A1-2017/069143
- JP-A- 2008 238 475
- JP-A- 2016 199 722
- JP-A- 2017 217 845
- JP-A- 2019 085 169

## Description

### [Technical Field]

The present invention generally relates to a gas barrier laminate.

### [Background Art]

When articles such as food products, pharmaceutical products, cosmetics, agricultural chemicals, and industrial products are stored for a long time, the quality of the articles is sometimes degraded by oxygen. Thus, as packaging materials for such articles, films or sheets having oxygen gas barrier properties are used.

As such packaging materials, conventionally, packaging materials including an aluminum foil as a gas barrier layer have often been used. However, when a packaging material including an aluminum foil is used, the contents of the packaging material are not visible, and a metal detector cannot be used on the packaging material. Thus, particularly in the field of food products and the field of pharmaceutical products, there has been a demand for the development of a packaging material that has high gas barrier properties and transparency.

In order to meet this demand, a gas barrier laminate has been used in which a layer made of polyvinylidene chloride (PVDC) formed by applying a coating solution, containing PVDC, onto a substrate. The layer made of PVDC has transparency and gas barrier properties.

However, there is a concern that PVDC generates dioxins during incineration. Thus, there has been a demand for a shift from PVDC to non-chlorinated materials. In order to meet the demand, for example, the use of a polyvinyl alcohol (PVA) polymer instead of PVDC has been proposed.

A layer made of a PVA polymer is dense due to hydrogen bonding of the hydroxyl group, and exhibits high gas barrier properties in a low-humidity atmosphere. In a high-humidity atmosphere, however, a layer made of a PVA polymer absorbs moisture and weakens the hydrogen bonding, leading to significant deterioration of the gas barrier properties. Thus, in many cases, a gas barrier laminate including a layer made of a PVA polymer as a gas barrier layer cannot be used as a packaging material for food products containing a large amount of water, and the like, and the use of such a gas barrier laminate has been limited to a packaging material for dry substances, and the like.

For the purpose of further improving the gas barrier properties, addition of an inorganic layered compound to the PVA polymer has been proposed (see PTL 1). However, the addition of an inorganic layered compound does not improve the water resistance of the PVA polymer; thus, deterioration of the gas barrier properties still occurs in a high-humidity atmosphere.

In order to improve the gas barrier properties in a high-humidity atmosphere, production of a gas barrier laminate has been proposed in which a coating solution, containing a PVA polymer and a polymer that can form a cross-linked structure with the PVA polymer, is applied to a substrate and heat treated (see PTLs 2 to 6).

However, in order to obtain sufficient gas barrier properties using such a technique, heat treatment after application of the coating solution needs to be performed at high temperature, for example, at 150°C or more, to form a cross-linked structure. Such heat treatment severely deteriorates substrates made of certain materials, for example, substrates made of polyolefins such as polypropylene (OPP) or polyethylene (PE). This leads to a demand for a gas barrier laminate that can be produced under milder conditions.

Proposed methods of forming a gas barrier layer include a method in which a layer, containing a polycarboxylic acid polymer such as polyacrylic acid, is formed and the polycarboxylic acid polymer is ionically cross-linked with polyvalent metal ions (see PTLs 7 and 8).

This method does not require heat treatment at high temperature unlike the methods described in PTLs 2 to 6. This allows the use of polyolefin as the substrate. Furthermore, a gas barrier layer obtained by this method has high gas barrier properties even in a high-humidity atmosphere. Thus, a gas barrier laminate including the gas barrier layer can be used as a material subjected to heat sterilization treatment such as boiling treatment or retort treatment.

However, when a polycarboxylic acid polymer and a polyvalent metal compound coexist in a coating solution, the polycarboxylic acid polymer and the polyvalent metal compound react in the coating solution and precipitation easily occurs. The precipitate in the solution hinders the formation of a uniform film. In this method, therefore, when forming a gas barrier layer, a layer containing a polycarboxylic acid polymer and a layer containing a polyvalent metal compound are separately formed, or an aqueous solution of a polyvalent metal salt is brought into contact with a layer containing a polycarboxylic acid polymer. Thus, the problem with this method is that more steps are required.

There has been proposed a technique of adjusting the water content of a coating solution containing a polycarboxylic acid polymer, polyvalent metal compound particles, a surfactant, and an organic solvent to 1000 ppm or less (see PTL 9). In the coating solution, which has a water content of 1000 ppm or less, a reaction between the polycarboxylic acid polymer and the polyvalent metal compound is suppressed.

PTL 10 relates to a packaging container having a multilayer structure including a gas barrier layer, a specific maximum height roughness (Rz) of the container surface, a specific oxygen transmission rate under conditions of 20°C, 65%RH and a low oxygen concentration inside the packaging container 10 days after hermetic packaging.

PTL 11 relates to a gas barrier laminate including a gas barrier layer comprising a polycarboxylic acid-based polymer having polyvalent metal ionic crosslinks between carboxyl groups, and an undercoat layer comprising a nonaqueous resin on at least one surface of a plastic substrate.

PTL 12 discloses a gas barrier coating liquid including polycarboxylic acid-based polymer, a polyvalent metal ion, a volatile base or acid (excluding carbonic acid), a carbonate ion and at least one type of silicon compound selected from a group consisting of a silicon compound having a functional group that reacts with the polycarboxylic acid-based polymer and a hydrolyzable orthosilicate ester.

PTL 13 provides a coating liquid comprising zinc oxide ultrafine particles, a polyester resin, an ammonium polycarboxylate and water, wherein the content of the ammonium polycarboxylate is 1 to 35% by mass relative to the zinc oxide ultrafine particles.

PTL 14 is concerned with a gas barrier formed of a polycarboxylic acid polymer partially neutralized with a polyvalent metal ion and a crosslinking agent (B) with a group reactive with a carboxyl group.

### [Citation List]

### [Patent Literature]

[PTL 1] JP H06-093133 A
[PTL 2] JP 2000-289154 A
[PTL 3] JP 2000-336195 A
[PTL 4] JP 2001-323204 A
[PTL 5] JP 2002-020677 A
[PTL 6] JP 2002-241671 A
[PTL 7] WO 2003/091317 A
[PTL 8] WO 2005/053954 A
[PTL 9] JP 2005-126528 A
[PTL 10] JP 2019 085169 A
[PTL 11] JP 2017 217845 A
[PTL 12] JP 2016 199722 A
[PTL 13] WO 2017/069143 A1
[PTL 14] JP 2008 238475 A

### [Summary of the Invention]

PTL 9 discloses a coating solution capable of forming a film having high gas barrier properties under high-humidity conditions. In a laminate formed by applying the coating solution, however, under more severe environment, with high temperature and high humidity, separation may occur between a coating layer having gas barrier properties formed by applying the coating solution and a layer adjacent to the coating layer, for example, an adhesive layer or a sealant layer, leading to deterioration of the gas barrier properties.

An object of the present invention is to provide a gas barrier laminate in which separation between a coating layer having gas barrier properties and a layer adjacent to the coating layer, for example, an adhesive layer or a sealant layer, is less likely to occur under a high-temperature and high-humidity environment.

A first aspect of the present invention provides a coating solution for producing a gas barrier laminate including a carboxyl group-containing polymer (A), polyvalent metal-containing particles (B), a surfactant (C), an organic solvent (D), and at least one silicon-containing compound (E) selected from a group consisting of a silane coupling agent represented by the following general formula (1), a silane coupling agent represented by the following general formula (2), hydrolysates thereof, and condensates thereof, wherein a mass ratio of the silicon-containing compound (E) to the carboxyl group-containing polymer (A) (a mass of the silicon-containing compound (E) is expressed in terms of a silane coupling agent) is 0.5% or more and 7% or less.

Si(OR1)₃Z1 ... (1)

Si(R2)(OR3)₂Z2 ... (2)

(In the general formula (1), R1 are the same or different alkyl groups having 1 to 6 carbon atoms, and Z1 is a group containing an epoxy group, and in the general formula (2), R2 is a methyl group, R3 are the same or different alkyl groups having 1 to 6 carbon atoms, and Z2 is a group containing an epoxy group.)

A second aspect of the present invention provides the coating solution according to the first aspect, wherein a ratio of a product (Bt) of the number of moles of a polyvalent metal in the polyvalent metal-containing particles (B) and a valence of the polyvalent metal to the number of moles (At) of a carboxyl group in the carboxyl group-containing polymer (A) is 0.6 or more.

A third aspect of the present invention provides the coating solution according to the first or second aspect, wherein the carboxyl group-containing polymer (A) is a homopolymer of a carboxyl group-containing unsaturated monomer, a copolymer of two or more carboxyl group-containing unsaturated monomers, a copolymer of a carboxyl group-containing unsaturated monomer and another polymerizable monomer, a carboxyl group-containing polysaccharide, or a mixture of two or more of these materials.

A fourth aspect of the present invention provides the coating solution according to any one of the first to third aspects, wherein a carboxyl group-containing unsaturated monomer constituting the carboxyl group-containing polymer (A) is at least one α,β-monoethylenically unsaturated carboxylic acid selected from a group consisting of acrylic acid, methacrylic acid, crotonic acid, itaconic acid, maleic acid, and fumaric acid.

A fifth aspect of the present invention provides the coating solution according to any one of the first to fourth aspects, wherein the polyvalent metal-containing particles (B) have an average particle size in a range of 10 nm to 10 µm.

A sixth aspect of the present invention provides the coating solution according to any one of the first to fifth aspects, wherein a polyvalent metal of the polyvalent metal-containing particles (B) is a divalent metal.

A seventh aspect of the present invention provides a production method of producing a gas barrier laminate. The production method includes forming a coating layer from the coating solution according to any one of the first to sixth aspects.

An eighth aspect of the present invention provides a gas barrier laminate obtained by the production method according to the seventh aspect.

A ninth aspect of the present invention provides a packaging material including the gas barrier laminate according to the eighth aspect.

A tenth aspect of the present invention provides a package including the packaging material according to the ninth aspect.

An eleventh aspect of the present invention provides a packaged article including the package according to the tenth aspect, and contents contained in the package.

The present invention provides a gas barrier laminate in which separation between a coating layer having gas barrier properties and a layer adjacent to the coating layer, for example, an adhesive layer or a sealant layer, is less likely to occur under a high-temperature and high-humidity environment.

### [Description of the Embodiments]

Embodiments of the present invention will be described below. The embodiments described below are each a specific version of any of the aspects set forth above.

### <Coating solution for producing gas barrier laminate>

A coating solution for producing gas barrier laminate (hereinafter also simply referred to as a coating solution) according to an embodiment of the present invention contains a carboxyl group-containing polymer (A), polyvalent metal-containing particles (B), a surfactant (C), an organic solvent (D), and at least one silicon-containing compound (E) selected from the group consisting of a silane coupling agent represented by the following general formula (1), a silane coupling agent represented by the following general formula (2), hydrolysates thereof, and condensates thereof, wherein the mass ratio of the silicon-containing compound (E) to the carboxyl group-containing polymer (A) is 0.5% or more and 7% or less.

Si(OR1)₃Z1 ... (1)

Si(R2)(OR3)₂Z2 ... (2)

The mass of the silicon-containing compound (E) is expressed in terms of a silane coupling agent. In the general formula (1), R1 are alkyl groups having 1 to 6 carbon atoms that may be the same or different, and Z1 is a group containing an epoxy group. In the general formula (2), R2 is a methyl group, R3 are alkyl groups having 1 to 6 carbon atoms that may be the same or different, and Z2 is a group containing an epoxy group.

### [Carboxyl group-containing polymer (A)]

The carboxyl group-containing polymer contained in the coating solution is a polymer having two or more carboxyl groups in a molecule, and may be referred to as a "polycarboxylic acid polymer". The carboxyl group-containing polymer is generally a homopolymer of a carboxyl group-containing unsaturated monomer, a copolymer of two or more carboxyl group-containing unsaturated monomers, a copolymer of a carboxyl group-containing unsaturated monomer and other polymerizable monomer, or a polysaccharide having a carboxyl group in a molecule (also referred to as a "carboxyl group-containing polysaccharide" or an "acidic polysaccharide").

The carboxyl group may not necessarily be a free carboxyl group, and may be an acid anhydride group (specifically, a dicarboxylic acid anhydride group). The acid anhydride group may be partially ring-opened to be a carboxyl group. The carboxyl group may be partially neutralized with alkali. In such a case, the degree of neutralization is preferably 20% or less.

The "degree of neutralization" is a value obtained in the following manner. Specifically, the carboxyl group can be partially neutralized by adding an alkali (F) to the carboxyl group-containing polymer (A). The degree of neutralization is the ratio of the number of moles (Ft) of the alkali (F) to the number of moles (At) of the carboxyl group in the carboxyl group-containing polymer (A).

The carboxyl group-containing polymer may be a graft polymer obtained by graft-polymerizing a carboxyl group-containing unsaturated monomer with a polymer containing no carboxyl group, such as a polyolefin. The carboxyl group-containing polymer may be a polymer obtained by hydrolyzing a polymer having a hydrolyzable ester group such as an alkoxycarbonyl group (e.g., a methoxycarbonyl group) to convert the ester group into a carboxyl group.

The carboxyl group-containing unsaturated monomer is preferably an α,β-monoethylenically unsaturated carboxylic acid. Thus, the carboxyl group-containing polymer may be a homopolymer of an α,β-monoethylenically unsaturated carboxylic acid, a copolymer of two or more α,β-monoethylenically unsaturated carboxylic acids, or a copolymer of an α,β-monoethylenically unsaturated carboxylic acid and another polymerizable monomer. The polymerizable monomer is generally an ethylenically unsaturated monomer.

Examples of the α,β-monoethylenically unsaturated carboxylic acid include unsaturated monocarboxylic acids such as acrylic acid, methacrylic acid, and crotonic acid; unsaturated dicarboxylic acids such as maleic acid, fumaric acid, and itaconic acid; unsaturated dicarboxylic acid anhydrides such as maleic anhydride and itaconic anhydride; and a mixture of two or more of these materials. Of these, at least one α,β-monoethylenically unsaturated carboxylic acid selected from the group consisting of acrylic acid, methacrylic acid, crotonic acid, maleic acid, fumaric acid, and itaconic acid is preferable, and at least one α,β-monoethylenically unsaturated carboxylic acid selected from the group consisting of acrylic acid, methacrylic acid, and maleic acid is more preferable.

Examples of the polymerizable monomer copolymerizable with the α,β-monoethylenically unsaturated carboxylic acid, particularly the ethylenically unsaturated monomer, include ethylene; α-olefins such as propylene, 1-butene, 1-pentene, 1-hexene, and 1-octene; saturated carboxylic acid vinyl esters such as vinyl acetate; acrylic acid alkyl esters such as methyl acrylate and ethyl acrylate; methacrylic acid alkyl esters such as methyl methacrylate and ethyl methacrylate; chlorine-containing vinyl monomers such as vinyl chloride and vinylidene chloride; fluorine-containing vinyl monomers such as vinyl fluoride and vinylidene fluoride; unsaturated nitriles such as acrylonitrile and methacrylonitrile; aromatic vinyl monomers such as styrene and α-methylstyrene; and itaconic acid alkyl esters. These ethylenically unsaturated monomers may be used singly or in combination of two or more. When the carboxyl group-containing polymer is a copolymer of an α,β-monoethylenically unsaturated carboxylic acid and a saturated carboxylic acid vinyl ester such as vinyl acetate, it is possible to use a copolymer obtained by saponifying the copolymer of an α,β-monoethylenically unsaturated carboxylic acid and a saturated carboxylic acid vinyl ester to convert saturated carboxylic acid vinyl ester units to vinyl alcohol units.

Examples of the carboxyl group-containing polysaccharide include acidic polysaccharides having a carboxyl group in a molecule, such as alginic acid, carboxymethyl cellulose, and pectin. These acidic polysaccharides may be used singly or in combination of two or more. An acidic polysaccharide may be used in combination with a (co)polymer of an α,β-monoethylenically unsaturated carboxylic acid.

When the carboxyl group-containing polymer is a copolymer of an α,β-monoethylenically unsaturated carboxylic acid and another ethylenically unsaturated monomer, the ratio of the number of moles of the α,β-monoethylenically unsaturated carboxylic acid monomer to the total number of moles of the monomers in the copolymer is preferably 60 mol% or more, more preferably 80 mol% or more, and particularly preferably 90 mol% or more, from the viewpoint of the gas barrier properties, hot water resistance, and water vapor resistance of a film to be obtained.

The carboxyl group-containing polymer is preferably a homopolymer or a copolymer obtained by polymerizing only an α,β-monoethylenically unsaturated carboxylic acid, in view of the fact that a film having high gas barrier properties, moisture resistance, water resistance, hot water resistance and water vapor resistance and also excellent gas barrier properties under high-humidity conditions can easily be obtained. When the carboxyl group-containing polymer is a (co)polymer composed of only α,β-monoethylenically unsaturated carboxylic acid, specific examples of a preferable (co)polymer composed of only α,β-monoethylenically unsaturated carboxylic acid include homopolymers and copolymers obtained by polymerizing at least one α,β-monoethylenically unsaturated carboxylic acid selected from the group consisting of acrylic acid, methacrylic acid, crotonic acid, maleic acid, fumaric acid, and itaconic acid, and mixtures of two or more of these. Of these, homopolymers and copolymers of at least one α,β-monoethylenically unsaturated carboxylic acid selected from the group consisting of acrylic acid, methacrylic acid, and maleic acid are more preferable.

The carboxyl group-containing polymer is particularly preferably polyacrylic acid, polymethacrylic acid, polymaleic acid, or a mixture of two or more of these materials. The acidic polysaccharide is preferably alginic acid. Of these, polyacrylic acid is particularly preferable from the viewpoint of having relatively high availability and easily achieving a film having various good physical properties.

The number average molecular weight of the carboxyl group-containing polymer is not particularly limited, but is preferably in the range of 2,000 to 10,000,000, more preferably in the range of 5,000 to 1,000,000, and still more preferably in the range of 10,000 to 500,000, from the viewpoint of film formability and film physical properties.

The "number average molecular weight" is a value obtained by measurement using gel permeation chromatography (GPC). **In** the GPC measurement, the number average molecular weight of a polymer is generally measured and expressed in terms of standard polystyrene.

### [Polyvalent metal-containing particles (B)]

The polyvalent metal-containing particles used in the coating solution are particles containing one or more polyvalent metals in which metal ions have a valence of 2 or more. The polyvalent metal-containing particles may be particles composed of a polyvalent metal in which metal ions have a valence of 2 or more, particles composed of a compound of a polyvalent metal in which metal ions have a valence of 2 or more, or a mixture thereof.

Specific examples of the polyvalent metal include, but are not limited to, metals in Group 2A of the short-period periodic table, such as beryllium, magnesium, and calcium; transition metals such as titanium, zirconium, chromium, manganese, iron, cobalt, nickel, copper, and zinc; and aluminum.

The polyvalent metal is preferably a divalent metal. Furthermore, the polyvalent metal is preferably a polyvalent metal compound.

Specific examples of the polyvalent metal compound include, but are not limited to, an oxide, a hydroxide, a carbonate, an organic acid salt, and an inorganic acid salt of a polyvalent metal. Examples of the organic acid salt include, but are not limited to, acetate, oxalate, citrate, lactate, phosphate, phosphite, hypophosphite, stearate, and monoethylenically unsaturated carboxylate. Examples of the inorganic acid salt include, but are not limited to, chloride, sulfate, and nitrate. The polyvalent metal compound may be an alkyl alkoxide of a polyvalent metal. These polyvalent metal compounds may be used singly or in combination of two or more.

Of the polyvalent metal compounds, compounds of beryllium, magnesium, calcium, copper, cobalt, nickel, zinc, aluminum, or zirconium are preferable, and compounds of a divalent metal such as beryllium, magnesium, calcium, copper, zinc, cobalt, or nickel are more preferable, from the viewpoint of the dispersion stability of the coating solution and the gas barrier properties of a laminate to be formed from the coating solution.

Examples of a preferable divalent metal compound include, but are not limited to, oxides such as zinc oxide, magnesium oxide, copper oxide, nickel oxide, and cobalt oxide; carbonates such as calcium carbonate; organic acid salts such as calcium lactate, zinc lactate, and calcium acrylate; and alkoxides such as magnesium methoxide.

The polyvalent metal or the polyvalent metal compound is used as particles, and the shape of the particles is maintained in the coating solution. **In** the coating solution, the polyvalent metal-containing particles preferably have an average particle size in the range of 10 nm to 10 µm (or 10,000 nm), more preferably in the range of 12 nm to 1 µm (or 1,000 nm), still more preferably in the range of 15 nm to 500 nm, and particularly preferably in the range of 15 nm to 50 nm, from the viewpoint of the dispersion stability of the coating solution and the gas barrier properties of a laminate to be formed from the coating solution.

A coating solution containing polyvalent metal-containing particles having an excessively large average particle size is more likely to form a coating layer having insufficient thickness uniformity, surface flatness, and ionic crosslinking reactivity with the carboxyl group-containing polymer, and the like. A coating solution containing polyvalent metal-containing particles having an excessively small average particle size may lead to an early ionic crosslinking reaction with the carboxyl group-containing polymer. Furthermore, ultrafine particles having a particle size of less than 10 nm are difficult to uniformly disperse in the coating solution.

When a dry solid sample is used, the average particle size of the polyvalent metal-containing particles can be determined by measurement and counting using a scanning electron microscope or a transmission electron microscope. The average particle size of the polyvalent metal-containing particles in the coating solution can be measured by light scattering [reference: "Engineering system for fine particles" vol. I, pp. 362 to 365, Fuji Technosystem Co., Ltd. (2001)].

**In** the coating solution, the polyvalent metal-containing particles are present as primary particles, secondary particles, or a mixture thereof. **In** many cases, the average particle size of the polyvalent metal-containing particles indicates that the polyvalent metal-containing particles are presumably present as secondary particles.

### [Surfactant (C)]

The coating solution contains a surfactant in order to improve the dispersibility of the polyvalent metal-containing particles. A surfactant is a compound having both a hydrophilic group and a lipophilic group in a molecule. Surfactants include anionic, cationic, and amphoteric ionic surfactants, and nonionic surfactants. The coating solution may contain any of the surfactants.

Anionic surfactants include, for example, a carboxylic acid-type anionic surfactant, a sulfonic acid-type anionic surfactant, a sulfate ester-type anionic surfactant, and a phosphate ester-type anionic surfactant. Examples of the carboxylic acid-type anionic surfactant include aliphatic monocarboxylates, polyoxyethylene alkyl ether carboxylates, N-acyl sarcosinates, and N-acyl glutamates. Examples of the sulfonic acid-type anionic surfactant include dialkyl sulfosuccinates, alkanesulfonates, alpha olefin sulfonates, linear alkyl benzene sulfonates, alkyl (branched-chain) benzene sulfonates, naphthalene sulfonate-formaldehyde condensates, alkyl naphthalene sulfonates, and N-methyl-N-acyl taurates. Examples of the sulfate ester-type anionic surfactant include alkyl sulfates, polyoxyethylene alkyl ether sulfates, and oil-fat sulfate ester salts. Examples of the phosphate ester-type anionic surfactant include alkyl phosphates, polyoxyethylene alkyl ether phosphates, and polyoxyethylene alkyl phenyl ether phosphates.

Cationic surfactants include, for example, an alkylamine salt-type cationic surfactant and a quaternary ammonium salt-type cationic surfactant. Examples of the alkylamine salt-type cationic surfactant include monoalkylamine salts, dialkylamine salts, and trialkylamine salts. Examples of the quaternary ammonium salt-type cationic surfactant include halogenated (chloride, bromide, or iodide) alkyl trimethyl ammonium salts and alkyl benzalkonium chlorides.

Amphoteric surfactants include, for example, carboxybetaine-type amphoteric surfactants, 2-alkyl imidazoline derivative-type amphoteric surfactants, glycine-type amphoteric surfactants, and amine oxide-type amphoteric surfactants. Examples of the carboxybetaine-type amphoteric surfactant include alkyl betaines and fatty acid amide propyl betaines. Examples of the 2-alkyl imidazoline derivative-type amphoteric surfactant include 2-alkyl-N-carboxymethyl-N-hydroxyethylimidazolinium betaines. Examples of the glycine-type amphoteric surfactant include alkyl diethylene triaminoacetic acids and dialkyl diethylene triaminoacetic acids. Examples of the amine oxide-type amphoteric surfactant include alkylamine oxides.

Nonionic surfactants include, for example, ester-type nonionic surfactants, ether-type nonionic surfactants, ester ether-type nonionic surfactants, and alkanolamide-type nonionic surfactants. Examples of the ester-type nonionic surfactant include glycerine fatty acid ester, sorbitan fatty acid ester, and sucrose fatty acid ester. Examples of the ether-type nonionic surfactant include polyoxyethylene alkyl ethers, polyoxyethylene alkyl phenyl ethers, and polyoxyethylene polyoxypropylene glycols. Examples of the ester ether-type nonionic surfactant include fatty acid polyethylene glycols and fatty acid polyoxyethylene sorbitans. Examples of the alkanolamide-type nonionic surfactant include fatty acid alkanolamides.

The coating solution may contain a surfactant having a polymer backbone, such as a styrene-acrylic acid copolymer.

Of these surfactants, an anionic surfactant such as phosphate ester, a surfactant having a polymer backbone, such as a styrene-acrylic acid copolymer, and the like are preferable.

### [Organic solvent (D)]

The coating solution contains an organic solvent as a solvent or a dispersion medium. The coating solution generally contains, as the organic solvent, a polar organic solvent that dissolves a carboxyl group-containing polymer. The coating solution may contain an organic solvent having no polar group (heteroatom or atomic group having a heteroatom) in combination with a polar organic solvent.

Examples of an organic solvent that can be preferably used include polar organic solvents including alcohols such as methanol, ethanol, isopropanol, n-propanol, and n-butanol; dimethyl sulfoxide; N,N-dimethylacetamide; N,N-dimethylformamide; N-methyl-2-pyrrolidone; tetramethylurea; hexamethylphosphoric triamide; and γ-butyrolactone.

The organic solvent is not limited to the polar organic solvents, and may be appropriately selected from hydrocarbons such as benzene, toluene, xylene, hexane, heptane, and octane; ketones such as acetone and methyl ethyl ketone; halogenated hydrocarbons such as dichloromethane; esters such as methyl acetate; and ethers such as diethyl ether. A hydrocarbon having no polar group, such as benzene, is generally used in combination with a polar organic solvent.

The coating solution may contain only the organic solvent as a solvent or a dispersion medium, or may further contain water. In the coating solution containing water, the carboxyl group-containing polymer has a higher solubility, leading to better coating properties and workability of the coating solution. The coating solution may have a water content, as a mass fraction, of 100 ppm or more, 1,000 ppm or more, 1,500 ppm or more, or 2,000 ppm or more.

The coating solution preferably has a water content, as a mass fraction, of 50,000 ppm or less, more preferably 10,000 ppm or less, and still more preferably 5,000 ppm or less.

### [Silicon-containing compound (E)]

The coating solution contains a silicon-containing compound in order to achieve a high peel strength. The silicon-containing compound is at least one compound selected from the group consisting of a silane coupling agent represented by the following general formula (1), a silane coupling agent represented by the following general formula (2), hydrolysates thereof, and condensates thereof.

Si(OR1)₃Z1 ... (1)

Si(R2)(OR3)₂Z2 ... (2)

The mass of the silicon-containing compound (E) is expressed in terms of a silane coupling agent. In the general formula (1), R1 are alkyl groups having 1 to 6 carbon atoms that may be the same or different, and Z1 is a group containing an epoxy group. In the general formula (2), R2 is a methyl group, R3 are alkyl groups having 1 to 6 carbon atoms that may be the same or different, and Z2 is a group containing an epoxy group.

A silane coupling agent is easily hydrolyzed, and is easily condensed in the presence of acid or alkali. Thus, in the coating solution, the silicon-containing compound (E) is rarely present only in the form of a silane coupling agent represented by the general formula (1) or (2), only in the form of a hydrolysate thereof, or only in the form of a condensate thereof. That is, in the coating solution, the silicon-containing compound (E) is usually mixed as a mixture of at least a silane coupling agent represented by the general formula (1) or a silane coupling agent represented by the general formula (2), a hydrolysate thereof, and a condensate thereof.

Each of R1 and R3 may be an alkyl group having 1 to 6 carbon atoms, and is preferably a methyl group or an ethyl group. Each of Z1 and Z2 may be a group containing an epoxy group.

Specific examples of a silane coupling agent represented by the general formula (1) or (2) include 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, and 3-glycidoxypropyltriethoxysilane, and 3-glycidoxypropylmethyldimethoxysilane and 3-glycidoxypropyltrimethoxysilane are preferable. These silane coupling agents may be used singly or in combination of two or more.

The hydrolysate of a silane coupling agent represented by the general formula (1) or (2) may be a partial hydrolysate, a complete hydrolysate, or a mixture thereof.

The condensate contained in the coating solution as at least part of the silicon-containing compound (E) is two or more of a hydrolyzed condensate of a silane coupling agent represented by the general formula (1), a hydrolyzed condensate of a silane coupling agent represented by the general formula (2), and a condensate of the hydrolysate of a silane coupling agent represented by the general formula (1) and the hydrolysate of a silane coupling agent represented by the general formula (2). These hydrolyzed condensates are generated by the following reaction. Specifically, first, a silane coupling agent is hydrolyzed. Thus, in the silane coupling agent, one or more alkoxy groups in a molecule are substituted by one or more hydroxyl groups to form a hydrolysate. Then, the hydrolysate is condensed to form a compound in which silicon atoms (Si) are bonded via oxygen. Such condensation is repeated to form a hydrolysis condensate.

### [Composition]

The aforementioned coating solution is a dispersion liquid that contains the carboxyl group-containing polymer (A), the polyvalent metal-containing particles (B), the surfactant (C), the organic solvent (D), and the silicon-containing compound (E), and having the polyvalent metal-containing particles dispersed therein.

The ratio (hereinafter also referred to as equivalent ratio) of the product (Bt) of the number of moles of the polyvalent metal in the polyvalent metal-containing particles (B) and the valence of the polyvalent metal to the number of moles (At) of the carboxyl group in the carboxyl group-containing polymer (A) is preferably 0.6 or more. The ratio is more preferably 0.8 or more, and particularly preferably 1.0 or more. The upper limit of the ratio is generally 10.0, and preferably 2.0. If the ratio is excessively small, a laminate including a coating layer formed from the coating solution has poor characteristics such as low gas barrier properties, low hot water resistance, and low water vapor resistance.

The equivalent ratio can be obtained, for example, in the following manner. An example will be described in which polyacrylic acid is used as the carboxyl group-containing polymer, and magnesium oxide is used as the polyvalent metal compound.

Polyacrylic acid has a molecular weight of 72 in monomer units, and has one carboxyl group per molecule of the monomer. Thus, 100 g of polyacrylic acid contains 1.39 mol of carboxyl group. When the equivalent ratio in the coating solution containing 100 g of polyacrylic acid is 1.0, the coating solution contains a sufficient amount of magnesium oxide to neutralize 1.39 mol of carboxyl group. Thus, in order to cause the equivalent ratio in the coating solution containing 100 g of polyacrylic acid to be 0.6, the coating solution needs to contain a sufficient amount of magnesium oxide to neutralize 0.834 mol of carboxyl group. Magnesium is divalent, and magnesium oxide has a molecular weight of 40. Thus, in order to cause the equivalent ratio in the coating solution containing 100 g of polyacrylic acid to be 0.6, the coating solution needs to contain 16.68 g (0.417 mol) of magnesium oxide.

The coating solution contains a sufficient amount of organic solvent to allow uniform dissolution of the carboxyl group-containing polymer and uniform dispersion of the polyvalent metal-containing particles. Thus, the organic solvent contained in the coating solution is an organic solvent that dissolves the carboxyl group-containing polymer and that does not substantially dissolve the polyvalent metal compound and allows the polyvalent metal compound to be dispersed in the form of particles.

The coating solution contains a sufficient amount of surfactant to allow stable dispersion of the polyvalent metal-containing particles. The concentration of the surfactant in the coating solution is generally in the range of 0.0001 to 70 mass%, preferably in the range of 0.001 to 60 mass%, and more preferably in the range of 0.1 to 50 mass%.

If the coating solution contains no surfactant, it is difficult for the polyvalent metal-containing particles to be dispersed with a sufficiently small average particle size in the coating solution. As a result, it is difficult to obtain a coating solution in which the polyvalent metal-containing particles are uniformly dispersed. This makes it difficult to apply the coating solution onto a substrate to form a coating film having a uniform thickness.

The mass ratio of the silicon-containing compound to the carboxyl group-containing polymer (the mass of the silicon-containing compound is expressed in terms of a silane coupling agent) is 0.5% or more, more preferably 1.0% or more, still more preferably 1.5% or more, and particularly preferably 2.0% or more.

If a coating solution containing an excessively small amount of silicon-containing compound is used to form a gas barrier laminate, for example, by forming a coating film of the coating solution on a support, drying the coating film to form a gas barrier layer, and sequentially laminating an adhesive layer and a sealant layer on the gas barrier layer, the gas barrier laminate has a low peel strength. Thus, the laminate requires careful handling to prevent delamination, which would lead to low productivity.

The mass ratio of the silicon-containing compound to the carboxyl group-containing polymer is 7% or less.

A silicon-containing compound has no gas barrier properties. Thus, if the coating solution contains an excessively large amount of silicon-containing compound, a laminate formed from the coating solution has low gas barrier properties.

### [Method of producing coating solution]

**In** order to produce the coating solution, the carboxyl group-containing polymer (A) is uniformly dissolved in the organic solvent (D), followed by addition of the silicon-containing compound (E) to prepare a carboxyl group-containing polymer solution.

Furthermore, the polyvalent metal-containing particles (B), the surfactant (C), and the organic solvent (D) are mixed, followed by dispersion treatment as needed to prepare a dispersion liquid. The dispersion treatment is performed so that the polyvalent metal-containing particles (B) have a predetermined average particle size. When the polyvalent metal-containing particles (B) in the mixed solution before dispersion treatment have an average particle size of 10 µm or less, dispersion treatment may be omitted, but it is preferable to perform dispersion treatment even in such a case. The dispersion treatment enables disaggregation of the polyvalent metal-containing particles (B) and stabilizes the coating solution, and improves the transparency of a gas barrier laminate obtained by application of the coating solution. Furthermore, the dispersion treatment facilitates crosslinking of the carboxyl group-containing polymer and the polyvalent metal ions when the coating solution is applied to form a coating film and the coating film is dried, thus easily achieving a gas barrier laminate having good gas barrier properties.

The dispersion treatment may be performed using a high-speed agitator, a homogenizer, a ball mill, or a bead mill. **In** particular, dispersion using a ball mill or a bead mill enables the components to be efficiently dispersed, thus achieving a coating solution in a stable dispersion state in a relatively short time. In this case, it is preferable to use balls or beads having a small diameter, specifically, balls or beads having a diameter of 0.1 to 1 mm.

The coating solution can be produced by mixing together the carboxyl group-containing polymer solution and the dispersion liquid of the polyvalent metal-containing particles prepared as described above. The silicon-containing compound (E) may be omitted from the carboxyl group-containing polymer solution. In such a case, the silicon-containing compound (E) is mixed together, for example, when the carboxyl group-containing polymer solution is mixed with the dispersion liquid of the polyvalent metal-containing particles.

In the coating solution, the total concentration of the components other than the organic solvent is preferably in the range of 0.1 to 60 mass%, more preferably in the range of 0.5 to 25 mass%, and particularly preferably in the range of 1 to 20 mass%, from the viewpoint of obtaining a coating film and a coating layer having a desired thickness with high workability.

The coating solution may contain, as needed, various additives such as another polymer, a thickener, a stabilizer, an ultraviolet absorber, an anti-blocking agent, a softener, an inorganic layered compound (e.g., montmorillonite), and a colorant (dye, pigment).

### <Gas barrier laminate>

A gas barrier laminate according to an embodiment of the present invention includes a substrate, and a gas barrier layer provided on at least one surface of the substrate. The gas barrier layer includes a coating layer formed from the aforementioned coating solution.

### [Substrate]

The substrate of the gas barrier laminate is not particularly limited, and may be of various types.

The material for forming the substrate is not particularly limited, and may be of various types. Examples of the material include plastic and paper.

The substrate may be a single-layer substrate made of a single material, or may be a multilayer substrate made of a plurality of materials. The multilayer substrate may be, for example, a substrate formed by laminating a plastic film on a sheet of paper.

Of the above materials for forming the substrate, plastic is preferable because plastic can be formed into various shapes, and allows for a wider range of uses when gas barrier properties are imparted.

Examples of the plastic include, but are not particularly limited to, polyolefin resins such as polyethylene and polypropylene; polyester resins such as polyethylene terephthalate, polyethylene-2,6-naphthalate, polybutylene terephthalate, and copolymers thereof; polyamide resins such as nylon 6, nylon 66, nylon 12, meta-xylylene adipamide, and copolymers thereof; styrene resins such as polystyrene, styrene-butadiene copolymer, and a styrene-butadiene-acrylonitrile copolymer; poly(meth)acrylic acid ester; polyacrylonitrile; polyvinyl acetate; an ethylene-vinyl acetate copolymer; an ethylene-vinyl alcohol copolymer; polycarbonate; polyarylate; regenerated cellulose; polyimide; polyetherimide; polysulfone; polyethersulfone; polyetherketone; and ionomer resins.

When the gas barrier laminate is used as a food packaging material, the substrate is preferably made of polyethylene, polypropylene, polyethylene terephthalate, nylon 6, or nylon 66.

The plastics for forming the substrate may be used singly or in combination of two or more.

The plastic may contain an additive. The additive may be appropriately selected from known additives such as a pigment, an antioxidant, an antistatic agent, an ultraviolet absorber, and a lubricant, depending on the use. The additives may be used singly or in combination of two or more.

The form of the substrate is not particularly limited, and may be, for example, a film, a sheet, a cup, a tray, a tube, or a bottle. Of these, a film is preferable.

When the substrate is a film, the film may be a stretched film, or may be an unstretched film.

The thickness of the film is not particularly limited, but is preferably in the range of 1 to 200 µm, and more preferably in the range of 5 to 100 µm, from the viewpoint of the mechanical strength and processability of a gas barrier laminate to be obtained.

The surface of the substrate may be subjected to treatment such as plasma treatment, corona treatment, ozone treatment, flame treatment, or radical activation treatment with ultraviolet light (UV) or an electron beam, in order to allow the coating solution to be applied to the substrate without being repelled from the substrate. The treatment method is appropriately selected depending on the type of the substrate.

### [Coating layer]

The coating layer is formed from the aforementioned coating solution. Specifically, the coating layer is formed by applying the coating solution onto a substrate to form a coating film, and drying the coating film. As described above, the coating layer contains a carboxyl group-containing polymer ionically cross-linked with polyvalent metal ions, and exhibits high gas barrier properties even in a high-humidity atmosphere.

The coating layer may be provided on one surface of the substrate, or may be provided on both surfaces of the substrate.

The coating layer may be provided directly on the surface of the substrate, or may be provided on a surface of one or more other layers (e.g., an anchor coating layer) provided on the substrate.

The method of forming the coating layer will be described later in detail.

The thickness of the coating layer is not particularly limited, but is preferably in the range of 0.01 to 100 µm, more preferably in the range of 0.1 to 10 µm, and still more preferably in the range of 0.1 to 0.5 µm, from the viewpoint of the formability and handling during formation of a gas barrier laminate.

### [Other layers]

The gas barrier laminate may further include, as needed, one or more other layers in addition to the substrate and the coating layer.

For example, the gas barrier layer of the gas barrier laminate may be composed of only the coating layer, or may further include one or more other layers in addition to the coating layer. The gas barrier layer may include, for example, a layer made of an inorganic compound such as aluminum oxide, silicon oxide, or aluminum that is formed on the surface of the substrate by sputtering, ion plating, or the like.

The gas barrier laminate may further include an anchor coating layer between the substrate and the coating layer in order to improve adhesion between the substrate and the coating layer and to allow the coating solution to be applied to the substrate without being repelled from the substrate.

The anchor coating layer can be formed by a conventional method using a known anchor coating agent.

The anchor coating agent may contain, for example, a resin such as a polyurethane resin, an acrylic resin, a melamine resin, a polyester resin, a phenol resin, an amino resin, or a fluororesin.

The anchor coating agent may further contain an isocyanate compound in addition to the resin in order to improve adhesion and hot water resistance. The isocyanate compound may be any isocyanate compound having one or more isocyanate groups in a molecule, and may be, for example, hexamethylene diisocyanate, xylylene diisocyanate, isophorone diisocyanate, or tolylene diisocyanate.

The anchor coating agent may further contain a liquid medium for dissolving or dispersing the resin and the isocyanate compound.

The thickness of the anchor coating layer is not particularly limited.

The gas barrier laminate may further include, as needed, an additional layer laminated via an adhesive, or an additional layer laminated by extrusion lamination using an adhesive resin, on the coating layer provided on the substrate or on the surface of the substrate on which no coating layer is provided.

The material of the additional layer to be laminated is not particularly limited, and may be appropriately selected according to the properties to be achieved, such as strength, sealability, easy openability when sealed, designability, light shielding properties, and moisture resistance. Examples of the material of the additional layer include the plastics described above as the material of the substrate. The material of the additional layer may not necessarily be such a material, and may be paper, aluminum foil, or the like.

The thickness of the additional layer to be laminated is preferably in the range of 1 to 1000 µm, more preferably in the range of 5 to 500 µm, still more preferably in the range of 5 to 200 µm, and particularly preferably in the range of 5 to 150 µm.

The gas barrier laminate may include one type of additional laminated layer or two or more types of additional laminated layers.

The gas barrier laminate may further include a printed layer as needed. The printed layer may be formed on the coating layer provided on the substrate, or may be formed on the surface of the substrate on which no coating layer is provided. When the gas barrier laminate includes an additional laminated layer, the printed layer may be formed on the additional laminated layer.

### [Method of producing gas barrier laminate]

The gas barrier laminate can be produced by a production method including a step of applying the aforementioned coating solution onto a substrate and drying the coating film to form a coating layer. The production method may further include, as needed, a step of laminating an additional layer, a step of forming a printed layer, and the like, before and/or after the step of forming a coating layer.

The method of applying the coating solution is not particularly limited, and may be, for example, a method in which the coating solution is applied using an air knife coater, a direct gravure coater, gravure offset, an arc gravure coater, a reverse roll coater such as a top feed reverse coater, a bottom feed reverse coater, or a nozzle feed reverse coater, a five-roll coater, a lip coater, a bar coater, a bar reverse coater, or a die coater.

The method of drying the coating film is not particularly limited, and may be, for example, a method in which the coating film is naturally dried, a method in which the coating film is dried in an oven set at a predetermined temperature, or a method in which the coating film is dried using a dryer attached to a coater, such as an arch dryer, a floating dryer, a drum dryer, or an infrared dryer.

The drying conditions may be appropriately selected according to the drying method and the like. For example, in the method in which the coating film is dried in an oven, the drying temperature is preferably in the range of 40 to 150°C, more preferably in the range of 45 to 150°C, and particularly preferably in the range of 50 to 140°C. The drying time depends on the drying temperature, but is preferably in the range of 0.5 seconds to 10 minutes, more preferably in the range of 1 second to 5 minutes, and particularly preferably in the range of 1 second to 1 minute.

During or after drying, the carboxyl group-containing polymer and the polyvalent metal-containing particles in the coating film presumably react with each other to introduce an ionic cross-linked structure. **In** order to achieve a sufficient ionic crosslinking reaction, the film after drying is preferably aged in an atmosphere at a relative humidity of preferably 20% or more and more preferably in the range of 40 to 100% at a temperature preferably in the range of 5 to 200°C and more preferably in the range of 20 to 150°C for approximately 1 second to 10 days.

The gas barrier laminate obtained in this manner is ionically cross-linked, and thus has high moisture resistance, water resistance, hot water resistance, and water vapor resistance. The gas barrier laminate has high gas barrier properties not only under low-humidity conditions but also under high-humidity conditions. The oxygen permeability of the gas barrier laminate measured under conditions of 30°C and 70% relative humidity according to the method described in JIS K-7126 Method B (equal-pressure method) and ASTM D3985 is preferably 1,000 cm³/(m²•day•MPa) or less, more preferably 500 cm³/(m²•day•MPa) or less, and particularly preferably 100 cm³/(m²•day•MPa) or less. The gas barrier laminate having a lower oxygen permeability is more preferable. The lower limit of the oxygen permeability is not particularly limited, but is generally 0.1 cm³/(m²•day•MPa) or more.

### <Packaging material, package, and packaged article>

A packaging material according to an embodiment of the present invention includes the aforementioned gas barrier laminate. The packaging material is used, for example, to produce a package for packaging an article.

A package according to an embodiment of the present invention includes the aforementioned packaging material.

The package may be composed of the packaging material, or may include the packaging material and another member. In the former case, the package is formed, for example, by molding the packaging material into a bag shape. In the latter case, the package is, for example, a container including the packaging material as a lid, and a container body having a bottomed cylindrical shape.

The packaging material of the package may be a molded article. As described above, the molded article may be a container such as a bag, or may be part of a container, such as a lid. Specific examples of the package or the part of a package include a bag product, a pouch with a spout, a laminated tube, an infusion solution bag, a container lid, and a paper container.

The use of the package is not particularly limited. The package can be used to package various articles.

A packaged article according to an embodiment of the present invention includes the aforementioned package, and the contents contained in the package.

As described above, the gas barrier laminate has high gas barrier properties. Thus, the packaging material and the package including the gas barrier laminate are respectively preferably used as a packaging material and a package for an article that is easily degraded by the influence of oxygen, water vapor, or the like, particularly as a food packaging material and a food package. The packaging material and the package can also be respectively preferably used as a packaging material and a package for packaging chemicals such as agricultural chemicals and medicines, medical devices, machine components, or industrial materials such as precision materials.

When the gas barrier laminate is subjected to heat sterilization treatment such as boiling treatment or retort treatment, the gas barrier properties and interlayer adhesion of the gas barrier laminate do not deteriorate but tend to improve. Thus, the packaging material and the package may be respectively a heat sterilization packaging material and a heat sterilization package.

The heat sterilization packaging material and the heat sterilization package are used to package an article to be subjected to heat sterilization treatment after packaging.

Examples of the article to be subjected to heat sterilization treatment after packaging include food products such as curry, stew, soup, sauce, and processed meat products.

Examples of the heat sterilization treatment include boiling treatment and retort treatment.

The boiling treatment is a treatment in which moist heat sterilization is performed to preserve a food product or the like. In the boiling treatment, although depending on the contents, a packaged article in which the contents such as a food product are packaged in the package is generally subjected to moist heat sterilization treatment at a temperature of 60 to 100°C under atmospheric pressure for 10 to 120 minutes. The boiling treatment is generally performed using a hot water tank. Boiling treatments include a batch type treatment in which a packaged article is immersed in a hot water tank at a predetermined temperature and removed after a predetermined time, and a continuous type treatment in which a packaged article is passed through a tunnel in a hot water tank for sterilization.

Retort treatment is generally a process of pressurizing and heat sterilizing microorganisms such as molds, yeasts, and bacteria to preserve a food product or the like. In retort treatment, a packaged article in which a food product is packaged in the package is generally subjected to pressure heat sterilization treatment at a temperature of 105 to 140°C under a pressure of 0.15 to 0.3 MPa for 10 to 120 minutes. Retort devices include a steam type device using heated steam and a hot water type device using pressurized superheated water. These types of devices are used as appropriate depending on the sterilization conditions for a food product or the like serving as the contents.

Specific examples of the present invention will be described below.

### (Example 1)

A carboxyl group-containing polymer (A) was dissolved in 2-propanol by heating. As the carboxyl group-containing polymer (A), polyacrylic acid (Jurymer (registered trademark) AC-10LP manufactured by Toagosei Co., Ltd., number average molecular weight: 50,000) was used. Thus, a polyacrylic acid solution containing polyacrylic acid at a concentration of 10 mass% was prepared.

Furthermore, 1.8 g of polyether phosphate ester (Disparlon (registered trademark) DA-325 manufactured by Kusumoto Chemicals, Ltd., solid content: 100 mass%) was dissolved in 26.2 g of 2-propanol to obtain a solution. Then, 12 g of zinc oxide (FINEX (registered trademark) -30 manufactured by Sakai Chemical Industry Co., Ltd.) having an average primary particle size of 35 nm was added to the solution and stirred. The obtained solution was subjected to dispersion treatment using a planetary ball mill (P-7 manufactured by Fritsch) for 1 hour. In the dispersion treatment, zirconia beads having a diameter of 0.2 mm were used. Then, the beads were sifted out from the solution to obtain a dispersion liquid containing zinc oxide at a concentration of 30 mass%.

Next, 30.64 g of polyacrylic acid solution, 5.79 g of zinc oxide dispersion liquid, 0.08 g of silicon-containing compound (KBM-403 manufactured by Shin-Etsu Chemical Co., Ltd., functional group: epoxy group), and 23.57 g of 2-propanol were mixed to prepare a coating solution 1. In the coating solution 1, the mass ratio of the silicon-containing compound to the carboxyl group-containing polymer was 2.5%.

The coating solution 1 was applied to one surface of a biaxially stretched polyethylene terephthalate film (Lumirror (registered trademark) P60 manufactured by Toray Advanced Film Co., Ltd., thickness: 12 µm) using a bar coater (ROD No. 8 manufactured by Yasuda Seiki Seisakusho, Ltd., wet thickness: 20 µm) to form a coating film. The coating film was dried in an oven at 50°C for 1 minute to form a coating layer. Thus, a laminate 1 was obtained.

Next, an unstretched polypropylene film (ZK93-FM manufactured by Toray Advanced Film Co., Ltd., thickness: 60 µm) was laminated by dry lamination on the surface of the laminate 1 on the coating layer side via a two-component polyurethane adhesive (Takelac A-525/Takenate A-52 manufactured by Mitsui Chemicals, Inc.), followed by aging at 40°C for 3 days to obtain a laminate film 1.

### (Example 2)

A coating solution 2 was prepared in the same manner as the coating solution 1 except that the amounts of the components were changed to 30.64 g of polyacrylic acid solution, 5.79 g of zinc oxide dispersion liquid, 0.15 g of silicon-containing compound (KBM-403 manufactured by Shin-Etsu Chemical Co., Ltd., functional group: epoxy group), and 23.43 g of 2-propanol. In the coating solution 2, the mass ratio of the silicon-containing compound to the carboxyl group-containing polymer was 5.0%. A laminate 2 was obtained in the same manner as the laminate 1 except that the coating solution 2 was used instead of the coating solution 1. A laminate film 2 was obtained in the same manner as in Example 1 except that the laminate 2 was used instead of the laminate 1.

### (Reference Example 3)

Reference Example 3 is outside the scope of the claimed invention. A coating solution 3 was prepared in the same manner as the coating solution 1 except that the amounts of the components were changed to 30.64 g of polyacrylic acid solution, 5.79 g of zinc oxide dispersion liquid, 0.31 g of silicon-containing compound (KBM-403 manufactured by Shin-Etsu Chemical Co., Ltd., functional group: epoxy group), and 23.26 g of 2-propanol. In the coating solution 3, the mass ratio of the silicon-containing compound to the carboxyl group-containing polymer was 10.0%. A laminate 3 was obtained in the same manner as the laminate 1 except that the coating solution 3 was used instead of the coating solution 1. A laminate film 3 was obtained in the same manner as in Example 1 except that the laminate 3 was used instead of the laminate 1.

### (Reference Example 4)

Reference Example 4 is outside the scope of the claimed invention. A coating solution 4 was prepared in the same manner as the coating solution 1 except that the amounts of the components were changed to 30.64 g of polyacrylic acid solution, 5.79 g of zinc oxide dispersion liquid, 0 g of silicon-containing compound, and 23.57 g of 2-propanol. In the coating solution 4, the mass ratio of the silicon-containing compound to the carboxyl group-containing polymer was 0%. A laminate 4 was obtained in the same manner as the laminate 1 except that the coating solution 4 was used instead of the coating solution 1. A laminate film 4 was obtained in the same manner as in Example 1 except that the laminate 4 was used instead of the laminate 1.

### (Example 5)

A coating solution 5 was prepared in the same manner as the coating solution 1 except that as the silicon-containing compound, KBM-603 (manufactured by Shin-Etsu Chemical Co., Ltd., functional group: amino group) was used instead of KBM-403 (manufactured by Shin-Etsu Chemical Co., Ltd., functional group: epoxy group). In the coating solution 5, the mass ratio of the silicon-containing compound to the carboxyl group-containing polymer was 2.5%.

In this example, immediately after the silicon-containing compound (functional group: amino group) was added, aggregation occurred in the coating solution 5. Thus, it was not possible to form a film using the coating solution 5, and neither laminate nor laminate film was formed.

### [Evaluation]

### (1) Peel strength of laminate film

From each of the obtained laminate films, two film pieces having a size of 20 cm × 15 cm were cut out. The two film pieces were stacked so that the surfaces of the film pieces on the unstretched polypropylene film side faced each other, and three sides of the film pieces were sealed to produce a pouch. Then, 200 mL of water was poured into the pouch, followed by sealing of the remaining side of the pouch.

The obtained pouch filled with water was subjected to retort treatment at 121°C for 30 minutes using a retort treatment device (RCS-60 manufactured by Hisaka Works, Ltd.).

After the retort treatment, water was removed, and from each of the laminate films 1 to 4, a strip having a width of 15 mm was cut out. Then, the peel strength of the strips was measured at a T-peel angle at a speed of 300 mm/min using a Tensilon universal material testing instrument (RTC-1250 manufactured by Orientec Co., Ltd.). The results are shown in Table 1. When the peel strength between the layers was high and exceeded the breaking strength of the substrate, the substrate was broken during peel strength evaluation. The laminate films in which the substrate was broken during evaluation are indicated by "Broken" in the table.

### (2) Oxygen permeability of laminate film

From each of the obtained laminate films, two film pieces having a size of 20 cm × 15 cm were cut out. The two film pieces were stacked so that the surfaces of the film pieces on the unstretched polypropylene film side faced each other, and three sides of the film pieces were sealed to produce a pouch. Then, 200 mL of water was poured into the pouch, followed by sealing of the remaining side of the pouch.

The obtained pouch filled with water was subjected to retort treatment at 121°C for 30 minutes using a retort treatment device (RCS-60 manufactured by Hisaka Works, Ltd.).

After the retort treatment, water was removed, and the oxygen permeability of each of the laminate films 1 to 4 was measured using the following procedure.

Specifically, the oxygen permeability of each of the laminates was measured under conditions of a temperature of 30°C and a relative humidity of 70% using an oxygen permeation tester OXTRAN (registered trademark) 2/20 manufactured by Modern Control Inc. The measurement method was in accordance with JIS K-7126 Method B (equal-pressure method) and ASTM D3985, and the measurement values were expressed in units of cm³/(m²•day •MPa). The results are shown in Table 1.

**[Table 1]**

| | | Example 1 | Example 2 | Reference Example 3 | Reference Example 4 | Example 5 |
|---|---|---|---|---|---|---|
| Carboxyl group-containing polymer | Type | Polyacrylic acid | Polyacrylic acid | Polyacrylic acid | Polyacrylic acid | Polyacrylic acid |
| | Amount | 5.11 mass% | 5.11 mass% | 5.11 mass% | 5.11 mass% | 5.11 mass% |
| Polyvalent metal-containing particles | Type | Zinc oxide | Zinc oxide | Zinc oxide | Zinc oxide | Zinc oxide |
| | Amount | 2.89 mass% | 2.89 mass% | 2.89 mass% | 2.89 mass% | 2.89 mass% |
| Surfactant | Type | Polyether phosphate ester | Polyether phosphate ester | Polyether phosphate ester | Polyether phosphate ester | Polyether phosphate ester |
| | Amount | 0.43 mass% | 0.43 mass% | 0.43 mass% | 0.43 mass% | 0.43 mass% |
| Organic solvent | Type | 2-propanol | 2-propanol | 2-propanol | 2-propanol | 2-propanol |
| | Amount | 91.44 mass% | 91.31 mass% | 91.06 mass% | 91.57 mass% | 91.44 mass% |
| Silicon-containing compound | Functional group | Epoxy group | Epoxy group | Epoxy group | - | Amino group |
| | Amount | 0.13 mass% | 0.26 mass% | 0.51 mass% | 0 mass% | 0.13 mass% |
| Mass ratio | | 2.5% | 5.0% | 10.0% | 0% | 2.5% |
| Film formability | | Formable | Formable | Formable | Formable | Not formable |
| Peel strength [N/15 mm] | | Broken | Broken | Broken | 0.5 | - |
| Oxygen permeability [cm³/(m²·day·MPa)] | | 10 | 10 | 50 | 10 | - |

As shown in Table 1, the laminate films 1 and 2 had both high peel strength and high gas barrier properties. On the other hand, the laminate film 4, which was formed using the coating solution 4 containing no silicon-containing compound, had a low peel strength. As describe above, in the coating solution 5, aggregation occurred immediately after addition of the silicon-containing compound (functional group: amino group). Thus, no film was formed using the coating solution 5.

## Claims

1. A coating solution for producing a gas barrier laminate comprising:
a carboxyl group-containing polymer (A);
polyvalent metal-containing particles (B);
a surfactant (C);
an organic solvent (D); and
at least one silicon-containing compound (E) selected from a group consisting of a silane coupling agent represented by a following general formula (1), a silane coupling agent represented by a following general formula (2), hydrolysates thereof, and condensates thereof, wherein
a mass ratio of the silicon-containing compound (E) to the carboxyl group-containing polymer (A) (a mass of the silicon-containing compound (E) is expressed in terms of a silane coupling agent) is 0.5% or more and 7% or less.
Si(OR1)₃Z1 ... (1)
Si(R2)(OR3)₂Z2 ... (2)
(In the general formula (1), R1 are the same or different alkyl groups having 1 to 6 carbon atoms, and Z1 is a group containing an epoxy group, and in the general formula (2), R2 is a methyl group, R3 are the same or different alkyl groups having 1 to 6 carbon atoms, and Z2 is a group containing an epoxy group.)

2. The coating solution according to claim 1, wherein a ratio of a product (Bt) of the number of moles of a polyvalent metal in the polyvalent metal-containing particles (B) and a valence of the polyvalent metal to the number of moles (At) of a carboxyl group in the carboxyl group-containing polymer (A) is 0.6 or more.

3. The coating solution according to claim 1 or 2, wherein the carboxyl group-containing polymer (A) is a homopolymer of a carboxyl group-containing unsaturated monomer, a copolymer of two or more carboxyl group-containing unsaturated monomers, a copolymer of a carboxyl group-containing unsaturated monomer and another polymerizable monomer, a carboxyl group-containing polysaccharide, or a mixture of two or more of these materials.

4. The coating solution according to any one of claims 1 to 3, wherein a carboxyl group-containing unsaturated monomer constituting the carboxyl group-containing polymer (A) is at least one α,β-monoethylenically unsaturated carboxylic acid selected from a group consisting of acrylic acid, methacrylic acid, crotonic acid, itaconic acid, maleic acid, and fumaric acid.

5. The coating solution according to any one of claims 1 to 4, wherein the polyvalent metal-containing particles (B) have an average particle size in a range of 10 nm to 10 µm.

6. The coating solution according to any one of claims 1 to 5, wherein a polyvalent metal of the polyvalent metal-containing particles (B) is a divalent metal.

7. A production method of producing a gas barrier laminate, the production method comprising forming a coating layer from the coating solution according to any one of claims 1 to 6.

8. A gas barrier laminate obtained by the production method according to claim 7.

9. A packaging material comprising the gas barrier laminate according to claim 8.

10. A package comprising the packaging material according to claim 9.

11. A packaged article comprising:
the package according to claim 10; and
contents contained in the package.

## Patentansprüche

1. Beschichtungslösung zur Herstellung eines Gassperrlaminats, die folgendes umfasst:
Carboxylgruppen enthaltendes Polymer (A);
polyvalentes Metall enthaltende Partikel (B);
Tensid (C);
organisches Lösungsmittel (D); und
mindestens eine siliciumhaltige Verbindung (E), ausgewählt aus einer Gruppe, bestehend aus einem Silanhaftvermittler mit der folgenden allgemeinen Formel (1), einem Silanhaftvermittler mit der folgenden allgemeinen Formel (2), Hydrolysaten davon und Kodensaten davon, wobei
ein Massenverhältnis der siliciumhaltigen Verbindung (E) zu dem Carboxylgruppen enthaltenden Polymer (A) (die Masse der siliciumhaltigen Verbindung (E) wird ausgedrückt als Silankupplungsmittel) 0,5 % oder mehr und 7 % oder weniger ist.
Si(OR1)₃Z1 ... (1)
Si(R2) (OR3)₂Z2 ... (2)
(In der allgemeinen Formel (1) sind R1 gleiche oder verschiedene Alkylgruppen mit 1 bis 6 Kohlenstoffatomen und Z1 ist eine Gruppe, die eine Epoxygruppe enthält, und in der allgemeinen Formel (2) ist R2 eine Methylgruppe, R3 sind die gleichen oder verschiedene Alkylgruppen mit 1 bis 6 Kohlenstoffatomen und Z2 ist eine Gruppe, die eine Epoxygruppe enthält.)

2. Beschichtungslösung gemäß Anspruch 1, in der ein Verhältnis eines Produkts (Bt) der Zahl von Molen eines polyvalenten Metalls in den polyvalentes Metall enthaltenden Partikeln (B) und einer Valenz des polyvalenten Metalls zu der Zahl von Molen (At) einer Carboxylgruppe in dem Carboxylgruppen enthaltenden Polymer (A) 0,6 oder mehr ist.

3. Beschichtungslösung gemäß Anspruch 1 oder 2, in der das Carboxylgruppen enthaltende Polymer (A) ein Homopolymer eines Carboxylgruppen enthaltenden ungesättigten Monomers, ein Copolymer von zwei oder mehr Carboxylgruppen enthaltenden ungesättigten Monomeren, ein Copolymer eines Carboxylgruppen enthaltenden ungesättigten Monomers und eines anderen polymerisierbaren Monomers, ein Carboxylgruppen enthaltendes Polysaccharid oder eine Mischung von zwei oder mehreren dieser Materialien ist.

4. Beschichtungslösung gemäß mindestens einem der Ansprüche 1 bis 3, in der ein Carboxylgruppen enthaltendes ungesättigtes Monomer, das das Carboxylgruppen enthaltende Polymer (A) bildet, mindestens eine a,β-monoethylenisch ungesättigte Carbonsäure, ausgewählt aus einer Gruppe, bestehend aus Acrylsäure, Methacrylsäure, Crotonsäure, Itaconsäure, Maleinsäure und Fumarsäure, ist.

5. Beschichtungslösung gemäß mindestens einem der Ansprüche 1 bis 4, in der die polyvalentes Metall enthaltenden Partikel (B) eine mittlere Partikelgröße in einem Bereich von 10 nm bis 10 µm haben.

6. Beschichtungslösung gemäß mindestens einem der Ansprüche 1 bis 5, in der ein polyvalentes Metall der polyvalentes Metall enthaltenden Partikel (B) ein bivalentes Metall ist.

7. Herstellungsverfahren zur Herstellung eines Gassperrlaminats, wobei das Herstellungsverfahren die Bildung einer Beschichtung aus der Beschichtungslösung gemäß mindestens einem der Ansprüche 1 bis 6 umfasst.

8. Gassperrlaminat, das mit dem Herstellungsverfahren gemäß Anspruch 7 erhalten wird.

9. Verpackungsmaterial, das das Gassperrlaminat gemäß Anspruch 8 umfasst.

10. Verpackung, die das Verpackungsmaterial gemäß Anspruch 9 umfasst.

11. Verpackter Artikel, der folgendes umfasst:
die Verpackung gemäß Anspruch 10; und
in der Verpackung enthaltenen Inhalt.

## Revendications

1. Solution de revêtement pour la production d'un stratifié barrière aux gaz comprenant :
un polymère (A) contenant un groupe carboxyle ;
des particules (B) contenant un métal polyvalent ;
un tensioactif (C) ;
un solvant organique (D) ; et
au moins un composé (E) contenant du silicium sélectionné dans un groupe consistant en un agent de couplage de type silane représenté par une formule générale (1) suivante, un agent de couplage de type silane représenté par une formule générale (2) suivante, les hydrolysats de ceux-ci, et les condensats de ceux-ci, dans laquelle
un rapport massique du composé (E) contenant du silicium sur le polymère (A) contenant un groupe carboxyle (une masse du composé (E) contenant du silicium est exprimée en termes d'un agent de couplage de type silane) est de 0,5 % ou plus et de 7 % ou moins.
Si(OR1)₃Z1... (1)
Si(R2)(OR3)₂Z2... (2)
(Dans la formule générale (1), R1 sont des groupes alkyle identiques ou différents ayant 1 à 6 atomes de carbone, et Z1 est un groupe contenant un groupe époxy, et dans la formule générale (2), R2 est un groupe méthyle, R3 sont des groupes alkyle identiques ou différents ayant 1 à 6 atomes de carbone, et Z2 est un groupe contenant un groupe époxy.)

2. Solution de revêtement selon la revendication 1, dans laquelle un rapport d'un produit (Bt) du nombre de moles d'un métal polyvalent dans les particules (B) contenant un métal polyvalent et d'une valence du métal polyvalent par rapport au nombre de moles (At) d'un groupe carboxyle dans le polymère (A) contenant un groupe carboxyle est de 0,6 ou plus.

3. Solution de revêtement selon la revendication 1 ou la revendication 2, dans laquelle le polymère (A) contenant un groupe carboxyle est un homopolymère d'un monomère insaturé contenant un groupe carboxyle, un copolymère de deux ou plus de deux monomères insaturés contenant un groupe carboxyle, un copolymère d'un monomère insaturé contenant un groupe carboxyle et d'un autre monomère polymérisable, un polysaccharide contenant un groupe carboxyle, ou un mélange de deux ou plus de ces matériaux.

4. Solution de revêtement selon l'une quelconque des revendications 1 à 3, dans laquelle un monomère insaturé contenant un groupe carboxyle constituant le polymère (A) contenant un groupe carboxyle est au moins un acide carboxylique à mono-insaturation éthylénique α,β sélectionné dans un groupe consistant en l'acide acrylique, l'acide méthacrylique, l'acide crotonique, l'acide itaconique, l'acide maléique et l'acide fumarique.

5. Solution de revêtement selon l'une quelconque des revendications 1 à 4, dans laquelle les particules (B) contenant un métal polyvalent présentent une taille moyenne de particule dans une plage de 10 nm à 10 µm.

6. Solution de revêtement selon l'une quelconque des revendications 1 à 5, dans laquelle un métal polyvalent des particules (B) contenant un métal polyvalent est un métal divalent.

7. Procédé de production d'un stratifié barrière aux gaz, le procédé de production comprenant la formation d'une couche de revêtement à partir de la solution de revêtement selon l'une quelconque des revendications 1 à 6.

8. Stratifié barrière aux gaz obtenu par le procédé de production selon la revendication 7.

9. Matériau d'emballage comprenant le stratifié barrière aux gaz selon la revendication 8.

10. Emballage comprenant le matériau d'emballage selon la revendication 9.

11. Article emballé comprenant :
l'emballage selon la revendication 10 ; et
des contenus contenus dans l'emballage.
